# EUROPEAN PATENT APPLICATION

(11) **EP 4 723 327 A1**
(43) Date of publication of application: **08.04.2026**
(21) Application number: 25199980.1
(22) Date of filing: 03.09.2025
(51) Int. Cl.: H01M 50/204, H01M 50/242, H01M 50/244, H01M 50/262, H01M 50/249

(54) **BATTERY CASE, BATTERY PACK, AND METHOD FOR MANUFACTURING BATTERY PACK**

(30) Priority: 13.09.2024 KR 20240125941
(71) Applicant: Samsung SDI Co., Ltd., Yongin-si, Gyeonggi-do 17084 (KR)
(72) Inventor: PARK, Sanghun, 17084 Yongin-si (KR)
(74) Representative: Marks & Clerk LLP

(57) **Abstract**

A battery case, a battery pack, and a method for manufacturing a battery pack are provided. The battery case may include a first case, a second case fastened and coupled to the first case through a plurality of fastening parts, a vibration absorbing member in the plurality of fastening parts and configured to absorb vibration or shock applied to the plurality of fastening parts, and a coupling member adjacent to the vibration absorbing member and configured to prevent the vibration absorbing member from detaching and to couple the first case and the second case.

## Description

### BACKGROUND

### 1. Field

Aspects of embodiments of the present disclosure relate to a battery case, a battery pack, a method for manufacturing the a battery pack.

### 2. Description of the Related Art

Unlike primary batteries that are not designed to be charged, secondary batteries are designed to be discharged and recharged. Low-capacity secondary batteries are used in small portable electronic devices, such as smart phones, feature phones, notebook computers, digital cameras, camcorders, and/or the like. Large-capacity secondary batteries are widely used as power sources for driving motors, such as of hybrid vehicles or electric vehicles, and/or the like, and for power storage. The secondary battery includes an electrode assembly including a positive electrode and a negative electrode, a case that accommodates the electrode assembly, and a terminal part connected to the electrode assembly and/or the like.

In the case of a battery pack including a plurality of secondary batteries, a general casing method is to form two or more parts of a plastic material with good formability and protect a plurality of battery cells received in a case by fastening the two or more parts through a plurality of fastening parts. Such fastening parts are normally formed in areas that bear a load. Because the case is made of plastic, the fastening parts of the case may be easily damaged if (e.g., when) subjected to force.

The information disclosed in this Background section is for enhancement of understanding of the background of the present disclosure, and therefore, it may contain information that does not constitute related (or prior) art.

### SUMMARY

One or more aspects of the present disclosure are directed toward a battery case including a vibration absorbing member that absorbs vibration or shock applied to a plurality of fastening parts, a battery pack, and a method for manufacturing a battery pack.

However, the present disclosure is not limited to the preceding aspects. Additional aspects will be set forth in part in the description which follows and, in part, will be apparent from the description, or may be learned by practice of the presented embodiments of the disclosure. Accordingly, the present disclosure will be clearly understood by those skilled in the art from the description of the present disclosure.

An insulation member according to one or more embodiments of the present disclosure is a battery case that receives (e.g., includes) a plurality of battery cells and may include: a first case; a second case that is fastened and coupled to the first case through a plurality of fastening parts; a vibration absorbing member that is provided in the plurality of fastening parts and absorbs vibration or shock applied to the plurality of fastening parts; and a coupling member that is provided adjacent to the vibration absorbing member (e.g., configured) to prevent the vibration absorbing member from detaching and to couple the first case and the second case.

In one or more embodiments, the coupling member may be a protrusion formed on the first case and inserted into the vibration absorbing member.

In one or more embodiments, the coupling member may be a screw that penetrates the second case, the vibration absorbing member, and the first case and is screw-coupled thereto.

In one or more embodiments, the screw may be a tapping screw.

In one or more embodiments, the second case may include a receiving groove that receives (e.g., includes) the vibration absorbing member.

In one or more embodiments, the vibration absorbing member may be spaced and/or apart from the receiving groove by a predetermined distance.

A battery pack according to one or more embodiments of the present disclosure may include: a plurality of battery cells; and a battery case configured to receive the plurality of battery cells, wherein the battery case may include: a first case; a second case that is fastened and coupled to the first case through a plurality of fastening parts; a vibration absorbing member that is provided in the plurality of fastening parts and configured to absorb vibration or shock applied to the plurality of fastening parts; and a coupling member that is provided adjacent to the vibration absorbing member and configured to prevent the vibration absorbing member from detaching and to couple the first case and the second case.

In one or more embodiments, the coupling member may be a protrusion formed on the first case and inserted in (e.g., into) the vibration absorbing member.

In one or more embodiments, the coupling member may be a screw in (e.g., that penetrates) the second case, the vibration absorbing member, and the first case and is screw-coupled thereto (e.g., to the second case, the vibration absorbing member, and the first case).

In one or more embodiments, the screw may be a self-tapping screw (e.g., a tapping screw).

In one or more embodiments, the second case may have (include) a receiving groove configured to receive the vibration absorbing member.

In one or more embodiments, the vibration absorbing member may be spaced and/or apart from the receiving groove (e.g., by a predetermined distance).

A method for manufacturing a battery pack according to one or more embodiments of the present disclosure may include: manufacturing a first case; manufacturing a second case configured to be coupled to the first case through a plurality of fastening parts; accommodating a plurality of battery cells in the second case; providing a vibration absorbing member in the plurality of fastening parts, the vibration absorbing member being configured to absorb vibration or shock applied to the plurality of fastening parts; providing a coupling member for preventing detachment of the vibration absorbing member adjacent to the vibration absorbing member; and coupling the first case and the second case through the coupling member.

In one or more embodiments, the coupling of the first case and the second case may include fitting a protrusion in the first case into the vibration absorbing member.

In one or more embodiments, the coupling of the first case and the second case may include screwing a screw through the second case, the vibration absorbing member, and the first case.

In one or more embodiments, the screwing may include screwing a self-tapping screw through the second case, the vibration absorbing member, and the first case.

In one or more embodiments, the manufacturing of the second case may include forming a receiving groove for receiving the vibration absorbing member in the second case.

In one or more embodiments, the providing of the vibration absorbing member in the plurality of fastening parts may include providing the vibration absorbing member to be spaced and/or apart from the receiving groove (e.g., by a predetermined distance).

According to one or more embodiments of the present disclosure, a vibration absorbing member that absorbs vibration or shock applied to a plurality of fastening parts is provided, so that a case of a battery pack can be prevented from being damaged by vibration or shock transmitted from the outside.

According to one or more embodiments of the present disclosure, a coupling member is provided adjacent to the vibration absorbing member to couple a first case and a second case, so that the alignment of the vibration absorbing member can be maintained and the detachment of the vibration absorbing member can be prevented.

According to one or more embodiments of the present disclosure, if (e.g., when) a tapping screw is used as the coupling member, since by-products cut during tapping are mixed in the threads of the tapping screw and are fastened to the case made of plastic, a strong fastening force between the threads of the tapping screw and the case can be secured.

At least some of the above and other features of the invention are set out in the claims.

### BRIEF DESCRIPTION OF THE DRAWINGS

The following drawings attached to the present specification illustrate one or more embodiments of the present disclosure, and further describe aspects and features of the present disclosure together with the detailed description of the present disclosure. Thus, the present disclosure should not be construed as being limited to the drawings:
FIG. 1 is a schematic diagram illustrating a cylindrical secondary battery according to one or more embodiments;
FIG. 2 is a schematic diagram illustrating a prismatic secondary battery according to one or more embodiments;
FIGS. 3 and 4 are schematic diagrams illustrating a pouch-type (kind) secondary battery according to one or more embodiments;
FIGS. 5A-5D are diagrams illustrating a battery case in the related art;
FIGS. 6A and 6B are detailed diagrams illustrating a second case of a battery case in the related art;
FIG. 7 is a diagram illustrating a shape fastening part of a battery case in the related art;
FIG. 8 is a diagram illustrating a screw fastening part of a battery case in the related art;
FIG. 9 is a diagram illustrating a shape fastening part of a battery case according to one or more embodiments of the present disclosure;
FIG. 10 is a diagram illustrating a screw fastening part of a battery case according to one or more embodiments of the present disclosure; and
FIG. 11 is a flowchart illustrating a method for manufacturing a battery pack according to one or more embodiments of the present disclosure.

### DETAILED DESCRIPTION

In order to sufficiently understand the configuration and effect of the present disclosure, one or more embodiments of the present disclosure will be described in more detail with reference to the accompanying drawings. Prior to the description, it is noted that the terms or words used in this specification and claims should not be construed as being limited to common or dictionary meanings but instead should be understood to have meanings and concepts in agreement with the scope of the present disclosure based on the principle that those skilled in the art can define the concept of each term suitably. Accordingly, since the embodiments described in this specification and the configurations illustrated in the drawings are only an example of the present disclosure and they do not cover all the technical ideas of the present disclosure, it should be understood that one or more suitable changes and modifications may be made at the time of filing this application so one or more embodiments may be implemented in one or more suitable forms.

Unless otherwise noted, an expression in singular form such as "a," "an," or "the," may include the expression of plural form. For example, the phrase "A or B" may indicate "A but not B", "B but not A", and "A and B". It will be further understood that the terms "comprise/include," "comprises/includes," "comprising/including" "have," "having," and/or "has," when used herein, specify the presence of stated features, integers, steps, operations, elements, components, and/or groups thereof, but do not preclude the presence or addition of one or more other features, integers, steps, operations, elements, components, and/or groups thereof. Additionally, the terms "comprise(s)/comprising," "include(s)/including," "have/has/having", or other similar terms include or support the terms "consisting of" and "consisting essentially of," indicating the presence of stated features, integers, steps, operations, elements, and/or components, without or essentially without the presence of other features, integers, steps, operations, elements, components, and/or groups thereof. Moreover, in this context, "consisting essentially of" indicates that any additional components will not materially affect the chemical, physical, optical or electrical properties of the insulation member and/or battery pack.

In order to facilitate understanding of the present disclosure, the accompanying drawings are not drawn to scale and the dimensions of some components may be exaggerated. It should be noted that the same reference numerals are designated to the same components in different embodiments.

Reference to two compared elements, features, and/or the like as being "the same" refers to that they are "substantially the same". Therefore, the phrase "substantially the same" may include a deviation that is considered low in the art, for example, a deviation of 5% or less. The uniformity of any parameter in a given region may refer to that it is uniform from an average perspective.

Although the terms such as "first" and/or "second" are used to describe one or more suitable components, these components are not limited by these terms, of course. These terms are only used to distinguish one component from another component. Thus, unless specifically stated to the contrary, a first component may be termed a second component without departing from the teachings of example embodiments.

Throughout the specification, unless otherwise stated, each element may be singular or plural.

Arrangement of any component "above (or below)" or "on (or under)" a component may refer to that any component is arranged in contact with the upper (or lower) surface of the component, as well as that other components may be interposed between the element and any element arranged on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it refers to A, B, or A and B, unless otherwise stated. In some embodiments, when "C to D" is stated, it refers to C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, and/or the like may be used herein to describe one or more suitable elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of example embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

In the context of the present application and unless otherwise defined, the terms "use," "using," and "used" may be considered synonymous with the terms "utilize," or "utilization," "utilizing," and "utilized," respectively.

The terminology used herein is for the purpose of describing embodiments of the present disclosure and is not intended to limit the present disclosure.

### Secondary battery

The type (kind) of secondary battery includes a coin type (kind), a cylindrical type (kind), a prismatic type (kind), and a pouch type (kind). Prior to a description of embodiments of the present disclosure, first, cylindrical and prismatic secondary batteries are roughly described because the present disclosure may be basically applied to the cylindrical and prismatic secondary batteries.

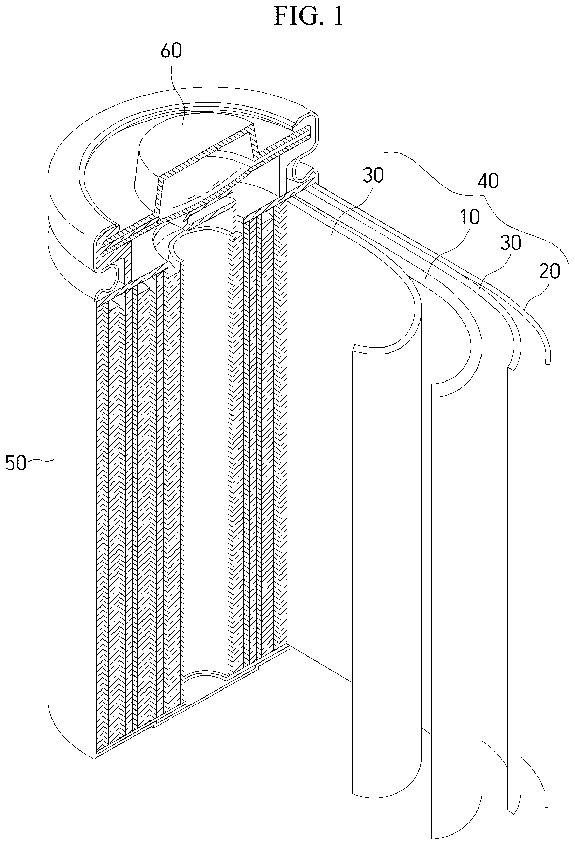

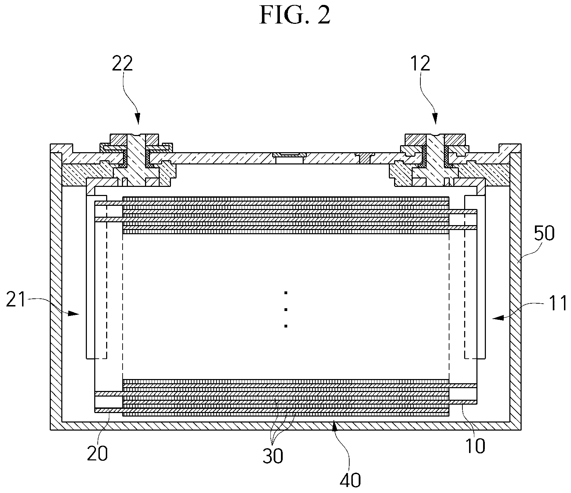

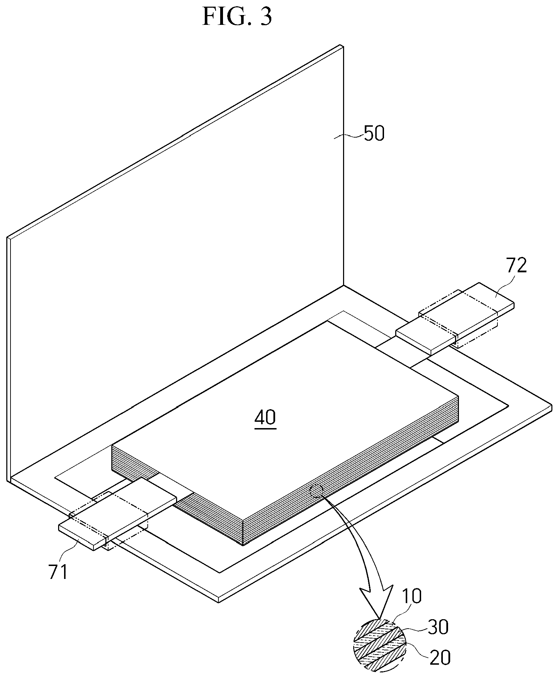

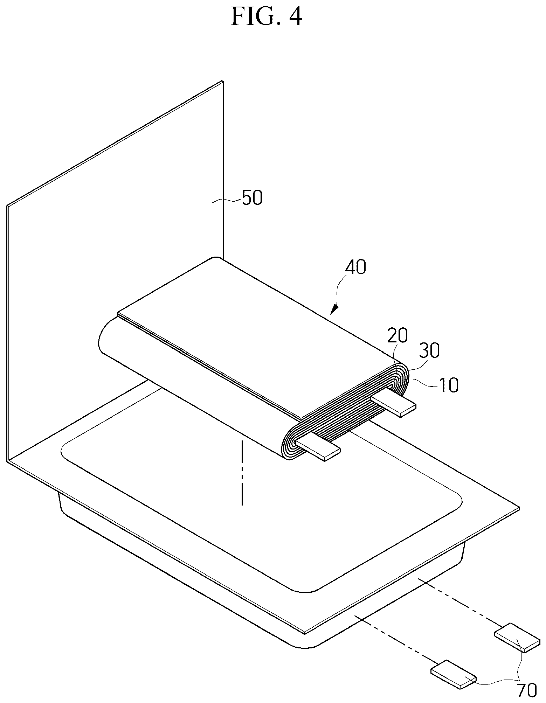

FIGS. 1 to 4 are schematic diagrams illustrating secondary batteries according to implementation examples. FIG. 1 may illustrate a cylindrical secondary battery. FIG. 2 may illustrate a prismatic type (kind) secondary battery. FIGS. 3 and 4 may illustrate a pouch type (kind) secondary battery. Referring to FIG. 1 to 4, a secondary battery 1 may include an electrode assembly 40 in which a separator 30 is interposed between a first electrode plate 10 and a second electrode plate 20 and a case 50 in which the electrode assembly 40 has been embedded (or accommodated). The first electrode plate 10, the second electrode plate 20, and the separator 30 may be impregnated in an electrolyte. As illustrated in FIG. 1, the secondary battery 1 may include a sealing member 60 that seals the case 50. Furthermore, in FIG. 2, the secondary battery 1 may include a first electrode lead tab 11, a first electrode terminal 12, a second electrode lead tab 21, and a second electrode terminal 22. As illustrated in FIGS. 3 and 4, the secondary battery 1 may include an electrode tab 70 that play a role as (e.g., acts as) an electrical passage for inducing a current formed in the electrode assembly 40 toward the outside. The electrode tab 70 may include a first electrode tab 71 and a second electrode tab 72.

The electrode assembly 40 may be formed by winding or stacking a stacked body including the first electrode plate 10, the second electrode plate 20, and the separator 30, each of which is formed in a plate or film shape. In the case of the winding stack body, the winding axis of the electrode assembly 40 may be parallel to the length direction of the case. Furthermore, the electrode assembly 40 may be the stack type (kind) not the winding type (kind), but a shape of the electrode assembly 40 is not limited in one or more embodiments of the present disclosure. The first electrode plate 10 of the electrode assembly 40 may play a role as (e.g., may act as) a positive electrode, and the second electrode plate 20 thereof may play a role as (e.g., may act as) a negative electrode, and vice versa.

The first electrode plate 10 may be formed by applying a first electrode active material, such as graphite or carbon, to a first electrode collector plate formed of metal foil, such as copper, a copper alloy, nickel, or a nickel alloy. The first electrode plate 10 may include a first electrode tab (or a first uncoated part), that is, an area to which the first electrode active material has not been applied.

The second electrode plate 20 may be formed by applying a second electrode active material, such as transition metal oxide, to a material formed of metal foil, such as aluminum or an aluminum alloy. The second electrode plate 20 may include a second electrode tab (or a second uncoated part), that is, an area to which the second electrode active material has not been applied.

The separator 30 prevents a short-circuit between the first electrode plate 10 and the second electrode plate 20 while permitting movement of lithium ions therebetween. The separator 30 may include (or may be composed of) a polyethylene film, a polypropylene film, or a polyethylene-polypropylene film, for example.

A plurality of secondary batteries that has been described above with reference to FIGS. 1 to 4 may be gathered to constitute a plurality of battery cells and accommodated in a battery case. A battery case according to embodiments of the present disclosure may include a support part that supports a hook after the hook is fastened to a hook hole, and can maintain the state in which the hook and the hook hole have been fastened because the breakaway of the hook attributable to the retreat of the hook can be prevented if (e.g., when) an impact is applied to a battery pack. Hereinafter, a battery case according to embodiments of the present disclosure and a method of manufacturing the battery case are described with reference to drawings.

A plurality of the secondary batteries described herein with reference to FIGS. 1 to 4 as examples may be assembled to form a plurality of battery cells and received in a battery case to form a battery pack.

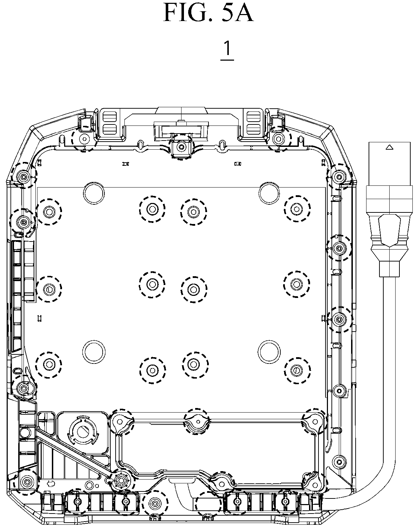

FIGS. 5A to 5D are diagrams illustrating a battery case according to the related art.

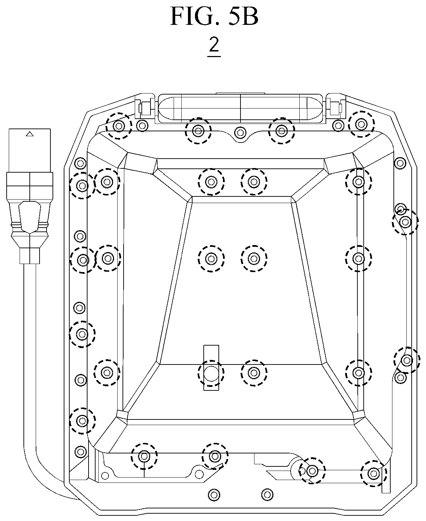

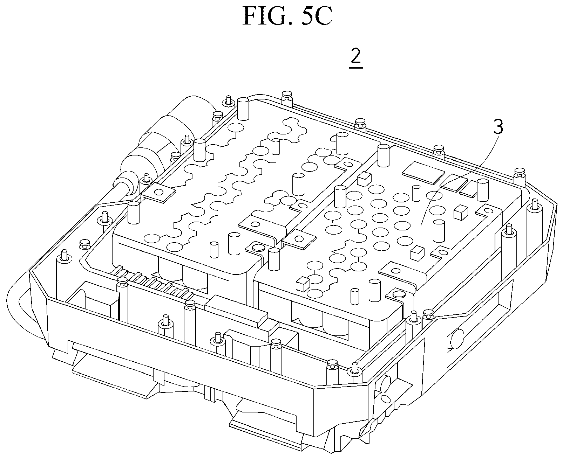

Referring to FIGS. 5A to 5D, a first case 1 illustrated in FIG. 5A and a second case 2 illustrated in FIG. 5B may be coupled to form a battery case. As illustrated in FIG. 5C, a battery management system (BMS) 3 is coupled to the interior of the second case 2. A plurality of screws are used for coupling the battery case or the BMS, as indicated by dotted circles in FIGS. 5A and 5B.

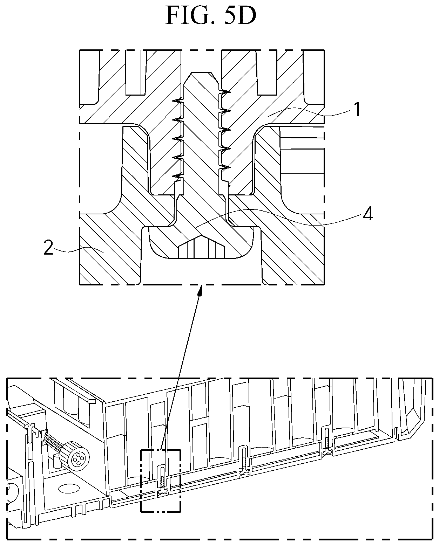

FIG. 5D illustrates an enlarged cross-sectional view of a part where the screws are coupled to the second case 2. The screws 4 are made of metal and are primarily inserted into the first case 1 and the second case 2, which are made of plastic. Accordingly, because the harder screw 4 is inserted into the relatively soft first case 1 and second case 2, the first case 1 and second case 2 are easily damaged. For example, because such fastening parts are usually formed in areas that bears a load, the fastening parts are easily damaged if (e.g., when) vibration or impact is applied to the fastening parts.

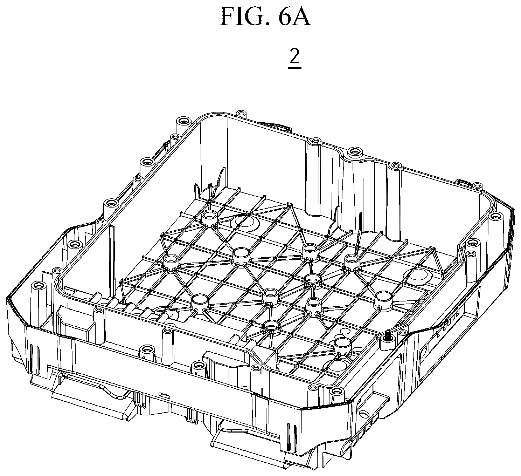

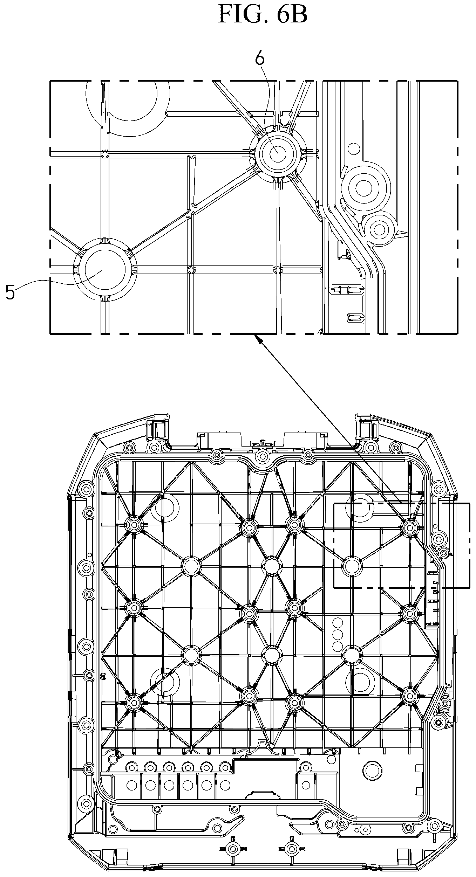

FIGS. 6A and 6B are detailed diagrams illustrating the second case of the battery case according to the related art.

FIG. 6A illustrates a state in which battery cells and components mounted in the second case 2 of the battery case according to the related art illustrated in FIG. 5B are omitted.

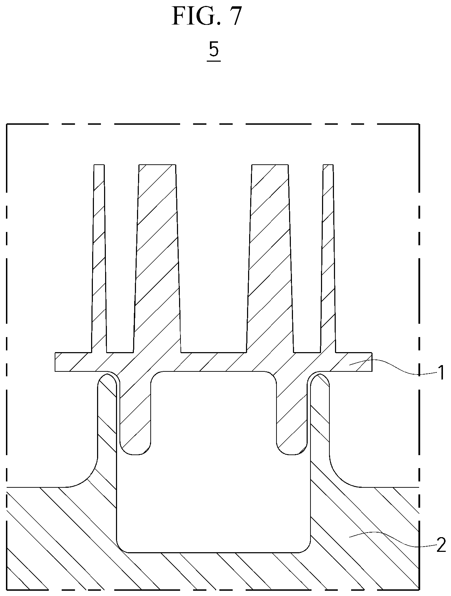

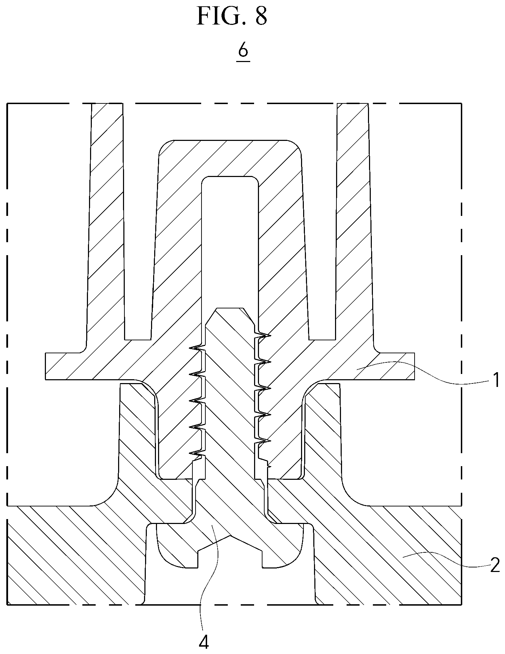

FIG. 6B illustrates a plurality of fastening parts 5 and 6 through which the first case 1 and the second case 2 are fastened and coupled to each other. The plurality of fastening parts may include a shape fastening part 5 and a screw fastening part 6. The shape fastening part 5 is a part that is fastened according to a shape, and the screw fastening part 6 is a part that is fastened with a screw. Accordingly, the shape fastening part 5 may have a groove for fastening (e.g., a fastening groove) according to a shape, and the screw fastening part 6 may be formed with a screw hole for fastening with a screw. The shape fastening part 5 and the screw fastening part 6 of the battery case according to the related art are described in more detail with reference to FIGS. 7 and 8.

FIG. 7 is a diagram illustrating the shape fastening part of the battery case according to the related art.

Referring to FIG. 7, the shape fastening part 5 of the battery case according to the related art may be formed by fitting a protrusion formed in the first case 1 into a fastening groove formed in the second case 2. Because such fitting is performed by tightly fitting the protrusion into the fastening groove, the shape fastening part 5 may be easily damaged if (e.g., when) vibration or impact is applied thereto.

FIG. 8 is a diagram illustrating the screw fastening part of the battery case according to the related art.

Referring to FIG. 8, the screw fastening part 6 of the battery case according to the related art may be formed by screwing the screw 4 through the screw hole of the first case 1 and the screw hole of the second case 2. In such screw coupling, because the screw 4 made of metal and the first case 1 and second case 2, each made of plastic, are coupled to each other, the relatively soft first case 1 and second case 2 may be easily damaged if (e.g., when) vibration or impact is applied to the screw fastening part 6.

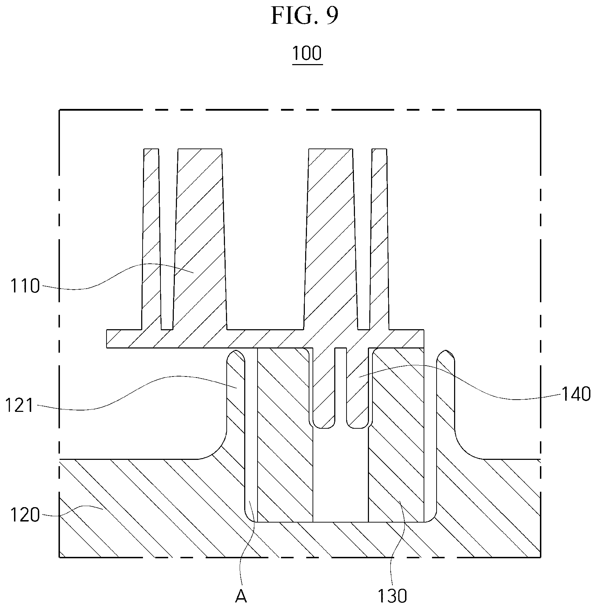

FIG. 9 is a diagram illustrating a shape fastening part of a battery case according to one or more embodiments of the present disclosure.

Referring to FIG. 9, a battery case 100 according to one or more embodiments of the present disclosure includes a first case 110 and a second case 120 that is fastened and coupled to the first case 110 through a plurality of fastening parts (e.g., fasteners). Because the first case 110 and the second case 120 may have the same configuration as the first case and the second case described above according to the related art except for the configuration of the fastening parts, detailed illustration and description thereof are not included or are only briefly repeated.

The battery case 100 according to one or more embodiments of the present disclosure may include a vibration absorbing member 130 that is provided in the plurality of fastening parts and absorbs vibration or shock applied to the plurality of fastening parts. In one or more embodiments, the vibration absorbing member 130 may be made of elastic rubber or a polymer material.

The battery case 100 according to one or more embodiments of the present disclosure may further include a coupling member 140 that is provided adjacent to the vibration absorbing member 130 to prevent detachment of the vibration absorbing member 130 and to couple the first case 110 and the second case 120. In one or more embodiments, as illustrated in FIG. 9, the coupling member 140 may be a protrusion formed on the first case 110 and fitted into the vibration absorbing member 130. Such a protrusion is provided on the first case 110, thereby maintaining the alignment of the vibration absorbing member 130 and preventing detachment of the vibration absorbing member 130.

In one or more embodiments, the second case 120 may include a receiving groove 121 that receives the vibration absorbing member 130. In such an embodiment, the vibration absorbing member 130 may be spaced and/or apart from the receiving groove 121 by a distance A. In such an embodiment, the vibration absorbing member 130 and the receiving groove 121 do not come into direct contact with each other and the gap A exists (or is formed) between the vibration absorbing member 130 and the receiving groove 121 so that vibration or shock is not horizontally transmitted to the fastening part.

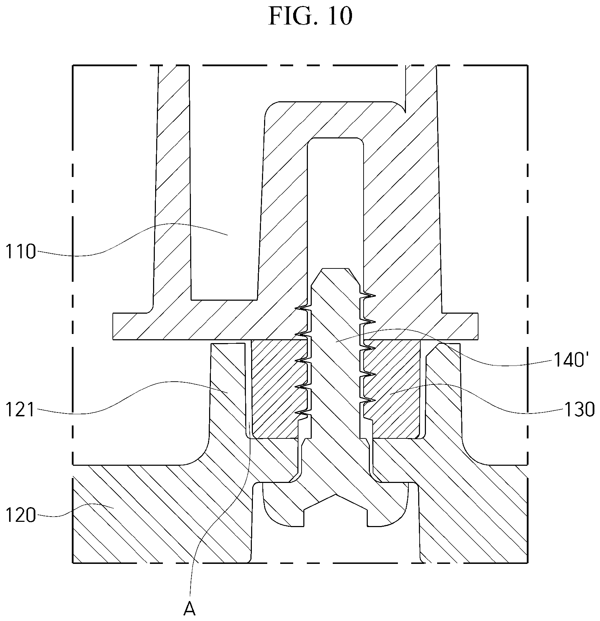

FIG. 10 is a diagram illustrating a screw fastening part of the battery case according to one or more embodiments of the present disclosure.

Referring to FIG. 10, the battery case 100 according to one or more embodiments of the present disclosure includes the first case 110 and the second case 120 that is fastened and coupled to the first case 110 through the plurality of fastening parts. Because the first case 110 and the second case 120 may have the same configuration as the first case and the second case described above according to the related art except for the configuration of the fastening parts, detailed illustration and description thereof are not included or are only briefly described.

The battery case 100 according to one or more embodiments of the present disclosure may include the vibration absorbing member 130 that is provided in the plurality of fastening parts and absorbs vibration or shock applied to the plurality of fastening parts. In one or more embodiments, the vibration absorbing member 130 may be made of elastic rubber or a polymer material.

The battery case 100 according to one or more embodiments of the present disclosure may further include a coupling member 140' that is provided adjacent to the vibration absorbing member 130 to prevent detachment of the vibration absorbing member 130 and to couple the first case 110 and the second case 120. In one or more embodiments, as illustrated in FIG. 10, the coupling member 140' may be a screw that penetrates (or extends through) the second case 120, the vibration absorbing member 130, and the first case 110 and is screw-coupled thereto. The screw coupling may maintain the alignment of the vibration absorbing member 130 and prevent the detachment of the vibration absorbing member 130 through the screw.

In one or more embodiments, the screw used in the screw fastening part may be a tapping screw (e.g., a self-tapping screw). The tapping screw may be inserted into an object formed without threads by forming threads through tapping. If (e.g., when) the screw used in the screw fastening part is a tapping screw, because by-products cut and removed during tapping are mixed in the threads of the tapping screw and are fastened to the plastic case, a strong fastening force between the threads of the tapping screw and the case may be secured.

In one or more embodiments, the second case 120 may have the receiving groove 121 that receives the vibration absorbing member 130. In such an embodiment, the vibration absorbing member 130 may be spaced and/or apart from the receiving groove 121 by the gap A. In such an embodiment, the vibration absorbing member 130 and the receiving groove 121 do not come into direct contact and the gap A exists between the vibration absorbing member 130 and the receiving groove 121 so that vibration or shock is not horizontally transmitted to the fastening part.

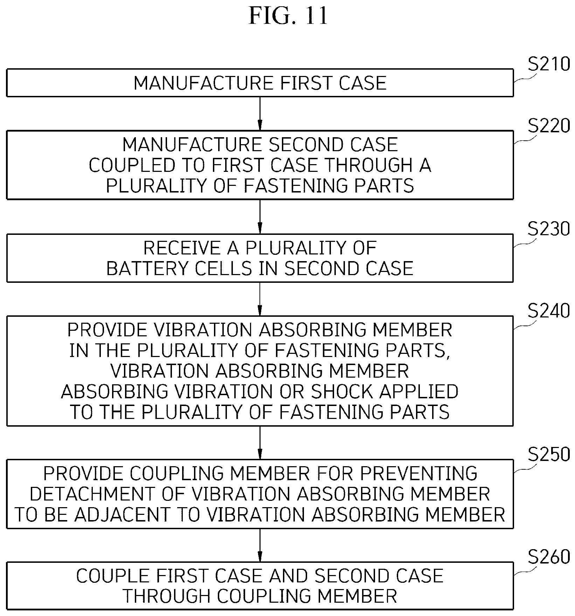

The battery case 100 according to one or more embodiments of the present disclosure described with reference to FIGS. 9 and 10 may configure a battery pack by receiving a plurality of battery cells. A method for manufacturing a battery pack according to one or more embodiments of the present disclosure is described with reference to FIG. 11.

FIG. 11 is a flowchart describing a method for manufacturing a battery pack according to one or more embodiments of the present disclosure.

Referring to FIG. 11, the method for manufacturing the battery pack according to one or more embodiments of the present disclosure may include steps S210, S220, S230, S240, S250, and S260.

Step S210 is a step for manufacturing a first case.

Step S220 is a step for manufacturing a second case that is coupled to the first case through a plurality of fastening parts. In one or more embodiments, step S220 may include a step for forming a receiving groove for receiving a vibration absorbing member in the second case.

Step S230 is a step for receiving a plurality of battery cells in the second case.

Step S240 is a step in which the vibration absorbing member for absorbing vibration or shock applied to the plurality of fastening parts is provided in the plurality of fastening parts. In one or more embodiments, step S240 may include a step in which the vibration absorbing member is spaced and/or apart from the receiving groove by an interval.

Step S250 is a step in which a coupling member for preventing detachment of the vibration absorbing member is provided adjacent to the vibration absorbing member.

Step S260 is a step of coupling the first case and the second case through the coupling member. In one or more embodiments, step S260 may include a step of fitting a protrusion formed in the first case into the vibration absorbing member. In another embodiment, step S260 may include a step of screwing a screw through the second case, the vibration absorbing member, and the first case. In one or more embodiments, the step of screwing may include a step of screwing a tapping screw through the second case, the vibration absorbing member, and the first case.

The method for manufacturing a battery pack according to one or more embodiments of the present disclosure described herein has been described with reference to the flow chart presented in the drawings. For simplicity, the method has been illustrated and described as a series of blocks, but the present disclosure is not limited to the order of the blocks, and some blocks may occur in a different order or simultaneously with other blocks illustrated and described in the present specification, and one or more suitable other branches, flow paths, and orders of blocks that achieve the same or similar results may be implemented. In some embodiments, all the illustrated blocks may not be required for implementing the method described in the present specification.

In the description with reference to FIG. 11, each step may be further divided into additional steps or coupled into fewer steps, depending on the implementation example of the present disclosure. In some embodiments, some steps may be not included as needed, and the order between the steps may be changed. In some embodiments, even in the case of other not included content, the content of FIGS. 9 and 10 may be applied to the content of FIG. 11. In some embodiments, the content of FIG. 11 may be applied to the content of FIGS. 9 and 10.

Hereinafter, materials which may be used in a secondary battery according to one or more embodiments of the present disclosure are described.

A compound (e.g., a lithiated intercalation compound) capable of reversible intercalation and deintercalation of lithium may be used as a positive electrode active material. For example, one type (kind) or more selected among complex oxides of metal, selected among cobalt, manganese, nickel, and a combination thereof, and lithium may be used as the positive electrode active material.

The complex oxide may be lithium transition metal complex oxide. A detailed example of the complex oxide may include lithium nickel-based oxide, lithium cobalt-based oxide, lithium manganese-based oxide, a lithium ferrous phosphate-based compound, cobalt-free nickel-manganese-based oxide, or a combination thereof.

For example, a compound that is represented as one of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the chemical formula, A may be Ni, Co, Mn, or a combination thereof. X may be Al, Ni, Co, Mn, Cr, Fe, Mg, Sr, V, a rare earth element, or a combination thereof; D may be O, F, S, P, or a combination thereof. G may be Al, Cr, Mn, Fe, Mg, La, Ce, Sr, V, or a combination thereof. L¹ may be Mn, Al, or a combination thereof.

A positive electrode for a secondary battery may include a current collector and a positive electrode active material layer formed on the current collector. The positive electrode active material layer may include the positive electrode active material, and may further include a binder and/or a conductive material.

Content of the positive electrode active material may be 90 wt.% to 99.5 wt.% with respect to the positive electrode active material layer 100 wt.%. Content of the binder and the conductive material may be 0.5 wt.% to 5 wt.% with respect to the positive electrode active material layer 100 wt.%.

Al may be used as the current collector, but the present disclosure may not be limited thereto.

A negative electrode active material may include a material capable of reversibly Intercalation/de-intercalation with respect to lithium ions, lithium metal, an alloy of lithium metal, a material capable of doping and dedoping with respect to lithium, or transition metal oxide.

The material capable of reversibly Intercalation/de-intercalation with respect to lithium ions may include a carbon-based negative electrode active material, for example, crystalline carbon, amorphous carbon, or a combination thereof. An example of the crystalline carbon may include graphite, such as natural graphite or synthetic graphite. Examples of the amorphous carbon may include soft or hard carbon, mesophase pitch carbide, and fired coke.

An Si-based negative electrode active material or an Sn-based negative electrode active material may be used as the material capable of doping and dedoping with respect to lithium. The Si-based negative electrode active material may be silicon, a silicon-carbon composite, SiOₓ (0<x<2), a Si-based alloy, or a combination thereof.

The silicon-carbon composite may be a composite of silicon and amorphous carbon. According to an implementation example, the silicon-carbon composite may include silicon particles, and may have a form in which amorphous carbon has been coated on surfaces of silicon particles.

The silicon-carbon composite may further include crystalline carbon. For example, the silicon-carbon composite may include a core including crystalline carbon and silicon particles, and an amorphous carbon coating layer arranged on a surface of the core.

A negative electrode for a secondary battery may include a current collector and a negative electrode active material layer arranged on the current collector. The negative electrode active material layer may include the negative electrode active material, and may further include a binder and/or a conductive material.

For example, the negative electrode active material layer may include the negative electrode active material of 90 wt.% to 99 wt.%, the binder of 0.5 wt.% to 5 wt.%, and the conductive material of 0 wt.% to 5 wt.%.

A nonaqueous-based binder, an aqueous-based binder, a dry binder, or a combination thereof may be used as the binder. If the aqueous-based binder is used as a binder for the negative electrode, the binder for the negative electrode may further include a cellulose-series compound capable of assigning viscosity.

One selected among nickel foil, stainless steel foil, titanium foil, nickel foam, copper foam, a polymer base on which a conductive metal has been coated, and a combination thereof may be used as a current collector for the negative electrode.

An electrolyte for a secondary battery may include a nonaqueous organic solvent and lithium salts.

The nonaqueous organic solvent may play a role as a medium through which ions that are involved in an electrochemical reaction of a battery can move.

The nonaqueous organic solvent may be a carbonate-based, ester-based, ether-based, ketone-based, or alcohol-based solvent, an aprotic solvent, or a combination thereof. The carbonate-based, ester-based, ether-based, ketone-based, or alcohol-based solvent, or the aprotic solvent may be used solely, or two types (kinds) or more may be mixed and used as the nonaqueous organic solvent.

Furthermore, if the carbonate-based solvent is used, annular carbonate and chain carbonate may be mixed and used.

A separator may be present between the positive electrode and the negative electrode depending on the type (kind) of secondary battery. Polyethylene, polypropylene, and polyvinylidene fluoride, or a multi-layer having two or more layers may be used as the separator.

The separator may include a porous base, and a coating layer including an organic matter, an inorganic matter, or a combination thereof that is arranged on one or both sides (e.g., opposite sides) of the porous base.

The organic matter may include a polyvinylidene fluoride-based heavy antibody or (meth)acrylic polymer.

The inorganic matter may include inorganic particles selected among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present disclosure is not limited thereto.

The organic matter and the inorganic matter may have a form in which the organic matter and the inorganic matter have been mixed in one coating layer or a form in which a coating layer including the organic matter and a coating layer including the inorganic matter have been stacked.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or ± 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

A battery manufacturing device, a battery management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the components of the device may be formed on one integrated circuit (IC) chip or on separate IC chips. Further, the components of the device may be implemented on a flexible printed circuit film, a tape carrier package (TCP), a printed circuit board (PCB), or formed on one substrate. Further, the components of the device may be a process or thread, running on one or more processors, in one or more computing devices, executing computer program instructions and interacting with other system components for performing the functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, and/or the like. Also, a person of skill in the art should recognize that the functionality of computing devices may be combined or integrated into a single computing device, or the functionality of a particular computing device may be distributed across one or more other computing devices without departing from the scope of the present disclosure.

Descriptions of features or aspects within each embodiment should typically be considered as available for other similar features or aspects in other embodiments.

Although the present disclosure has been described herein in connection with the limited embodiments and drawings, the present disclosure is not limited to the embodiments. A person having ordinary knowledge in the art to which the present disclosure pertains may modify and change the present disclosure within the technical scope of the present disclosure and the equivalent range of the following claims and equivalents thereof.

## Claims

1. A battery case configured to receive a plurality of battery cells, the battery case comprising:
a first case;
a second case fastened and coupled to the first case through a plurality of fastening parts;
a vibration absorbing member in the plurality of fastening parts and configured to absorb vibration or shock applied to the plurality of fastening parts; and
a coupling member adjacent to the vibration absorbing member and configured to
prevent the vibration absorbing member from detaching and
couple the first case and the second case.

2. The battery case as claimed in claim 1, wherein the coupling member is a protrusion on the first case and is in the vibration absorbing member.

3. The battery case as claimed in claim 1, wherein the coupling member is a screw in the second case, the vibration absorbing member, and the first case, and is screw-coupled to the second case, the vibration absorbing member, and the first case.

4. The battery case as claimed in claim 3, wherein the screw is a self-tapping screw.

5. The battery case as claimed in any preceding claim, wherein the second case has a receiving groove configured to receive the vibration absorbing member.

6. The battery case as claimed in claim 5, wherein the vibration absorbing member is spaced apart from the receiving groove.

7. A battery pack comprising:
a plurality of battery cells; and
a battery case accommodating the plurality of battery cells, the battery case being as claimed in any preceding claim.

8. A method for manufacturing a battery pack, the method comprising:
manufacturing a first case;
manufacturing a second case configured to be coupled to the first case through a plurality of fastening parts;
accommodating a plurality of battery cells in the second case;
providing a vibration absorbing member in the plurality of fastening parts, the vibration absorbing member being configured to absorb vibration or shock applied to the plurality of fastening parts;
providing a coupling member for preventing detachment of the vibration absorbing member adjacent to the vibration absorbing member; and
coupling the first case and the second case through the coupling member.

9. The method for manufacturing a battery pack as claimed in claim 8, wherein the coupling of the first case and the second case comprises fitting a protrusion in the first case into the vibration absorbing member.

10. The method for manufacturing a battery pack as claimed in claim 8, wherein the coupling of the first case and the second case comprises screwing a screw through the second case, the vibration absorbing member, and the first case.

11. The method for manufacturing a battery pack as claimed in claim 10, wherein the screwing comprises screwing a self-tapping screw through the second case, the vibration absorbing member, and the first case.

12. The method for manufacturing a battery pack as claimed in any one of claims 8 to 11, wherein the manufacturing of the second case comprises forming a receiving groove for receiving the vibration absorbing member in the second case.

13. The method for manufacturing a battery pack as claimed in claim 12, wherein the providing of the vibration absorbing member in the plurality of fastening parts comprises providing the vibration absorbing member to be spaced apart from the receiving groove.
